# EUROPEAN PATENT APPLICATION

(11) **EP 3 872 944 A1**
(43) Date of publication of application: **01.09.2021**
(21) Application number: 19875448.3
(22) Date of filing: 04.03.2019
(51) Int. Cl.: H02H 9/04

(54) **DIRECT CURRENT ENERGY DISSIPATION APPARATUS AND CONTROL METHOD THEREFOR**

(30) Priority: 22.10.2018 CN 201811228756; 07.12.2018 CN 201811491913
(71) Applicant: NR ELECTRIC CO., LTD., Jiangning Nanjing, Jiangsu 211102 (CN); NR Engineering Co., Ltd., Nanjing, Jiangsu 211102 (CN)
(72) Inventor: XIE, Yeyuan, Nanjing, Jiangsu 211102 (CN); JIANG, Tiangui, Nanjing, Jiangsu 211102 (CN); LI, Haiying, Nanjing, Jiangsu 211102 (CN)
(74) Representative: Kurig, Thomas
(86) International application number: PCT/CN2019/076824
(87) International publication number: WO 2020/082660

(57) **Abstract**

Provided by the present application are a direct current energy dissipation apparatus and a control method therefor. The direct current energy dissipation apparatus comprises at least one energy consumption unit, comprising at least two voltage-sharing energy dissipation modules connected in series in the same direction; the voltage-sharing energy dissipation modules comprise direct current capacitor branches and energy dissipation branches that are connected in parallel, and the energy dissipation branches comprise first power semiconductor devices and energy dissipation resistors that are connected in series; and the direct current capacitor branches comprise direct current capacitors.

## Description

### Technical Field

The present application relates to the technical field of high-power electronic current transformation, in particular to a direct current energy dissipation apparatus and a control method therefor.

### Background

The direct current energy dissipation apparatus plays a crucial role in a high-voltage direct current power transmission system, and is typically applied to island power supply scenarios. In case where a power generation side is an inertia power supply similar to wind power, power cannot be sent out when a fault happens to the power receiving side, energy will be accumulated on the direct current side, the voltage of a direct current transmission line will rise, and consequentially, safety operation of equipment will be endangered.

According to a common technical solution in the prior art, power semiconductor devices, such as resistors formed by direct series connection and concentration of IGBTs, are adopted. The IGBT string is used to withstand a high voltage, and energy is dissipated by the concentrated resistors. By adoption of this solution, all the IGBTs have to be turned on during operation, which puts forward an extremely high requirement for the on-off consistency of the devices, and failure to meet this requirement will leads to overvoltage damage to part of the IGBT string; and the devices have to be turned on or off repeatedly during operation, thus being quite likely to be damaged.

A modular solution in the prior art has the drawbacks of a large number of devices, a high cost and poor reliability. For example, Patent Application No.CN102132484B provides a converter with distributed brake resistance, which mainly has the following defects: a bridge arm composed of diodes has a complicated potential; and the top diode of the bridge arm composed of the diodes is connected to an adjacent module and thus cannot be clamped by a capacitor. Due to the complicated operation mode, when the apparatus operates, the potential between modules cannot be determined if the modules operates asynchronously, thus leading to a risk of overvoltage breakdown of the diodes. Moreover, the number of the devices is large, four groups of power semiconductor devices are configured, and the reliability of the power semiconductor devices is low, so that the fault rate of the whole modules and the cost are higher. In this solution, each module comprises a bridge arm composed of two power semiconductor devices, and the potential connection between the bridge arms increase the difficulty of structural design.

### Summary

One embodiment of the present application provides a direct current energy dissipation apparatus, comprising at least one energy dissipation unit, wherein the energy dissipation unit comprises at least two voltage-sharing energy dissipation modules connected in series in the same direction; the voltage-sharing energy dissipation modules comprise direct current capacitor branches and energy dissipation branches that are connected in parallel, and the energy dissipation branches comprise first power semiconductor devices and energy dissipation resistors that are connected in series; and the direct current capacitor branches comprise direct current capacitors.

Furthermore, the direct current capacitor branches further comprises current-limiting resistors, current-limiting inductors or fuses that are connected in series with the direct current capacitors.

Furthermore, the direct current energy dissipation apparatus further comprises at least one unidirectional turn-on unit, wherein the unidirectional turn-on unit comprises at least two second power semiconductor devices connected in series in the same direction and is connected in series with the energy dissipation unit.

Furthermore, the direct current energy dissipation apparatus further comprises at least one charging unit connected in series with the energy dissipation unit, wherein the charging unit comprises a charging resistor and a charging switch that are connected in parallel.

Furthermore, the direct current energy dissipation apparatus further comprises at least one isolating switch connected in series with the energy dissipation unit.

Furthermore, the direct current energy dissipation apparatus further comprises at least one third power semiconductor device, wherein the third power semiconductor device is connected in parallel with the voltage-sharing energy dissipation modules and is used to bypass the voltage-sharing energy dissipation modules when actively turned on or passively broken down.

Furthermore, the voltage-sharing energy dissipation modules further comprise voltage-sharing resistors connected in parallel with the direct current capacitor branches.

Furthermore, the voltage-sharing energy dissipation modules further comprise first bypass switches connected in parallel with the direct current capacitor branches, and the first bypass switches are mechanical switches, or solid-state switches composed of power semiconductor devices.

Furthermore, the voltage-sharing energy dissipation modules further comprise second bypass branches connected in parallel with the direct current capacitor branches, wherein the second bypass branches comprise second bypass switches and first discharging resistors that are connected in series, and the second bypass switches are mechanical switches, or solid-state switches composed of power semiconductor devices.

Furthermore, first bypass branches comprise third bypass switches connected in parallel with the first power semiconductor devices, and the third bypass switches are mechanical switches, or solid-state switches composed of power semiconductor devices.

Furthermore, the unidirectional turn-on unit is connected in parallel with a nonlinear resistor.

Furthermore, the first power semiconductor devices are connected in reverse-parallel with at least one diode.

Furthermore, the energy dissipation resistors are connected in parallel with at least one diode.

Furthermore, the second power semiconductor devices are diodes, semi-controlled power semiconductor devices, or fully-controlled semiconductor devices.

Furthermore, the first power semiconductor devices are fully-controlled semiconductor devices.

One embodiment of the present application further provides a control method for a direct current energy dissipation apparatus, comprising: turning off first power semiconductor devices of energy dissipation branches of all voltage-sharing energy dissipation modules; and balancing voltages of the voltage-sharing energy dissipation modules by means of direct current capacitors and by selectively turning on the first power semiconductor devices.

Furthermore, after the step of turning off first power semiconductor devices of energy dissipation branches of all voltage-sharing energy dissipation modules, the method further comprises: turning on second power semiconductor devices of all unidirectional turn-on units of a direct current energy dissipation apparatus.

Furthermore, when started, the apparatus is charged by means of a charging unit, and after the step of turning off first power semiconductor devices of energy dissipation branches of all voltage-sharing energy dissipation modules, the control method further comprises: turning off a charging switch, and charging the direct current capacitors of the voltage-sharing energy dissipation modules by a charging resistor; and after charging is completed, turning on the charging switch, and bypassing the charging resistor.

Furthermore, the step of balancing voltages of the voltage-sharing energy dissipation modules by means of direct current capacitors and by selectively turning on the first power semiconductor devices comprises: when a direct current voltage across two terminals of the direct current energy dissipation apparatus rises and exceeds a first threshold, turning on part of the first power semiconductor devices according to a rule until the direct current voltage returns to a normal value, and then turning off all the first power semiconductor devices; or, when the direct current voltage rises and exceeds a second threshold, turning on all the first power semiconductor devices until the direct current voltage returns to the normal value, and then turning off all the first power semiconductor devices.

Furthermore, the method further comprises: when it is detected that a fault happens to the voltage-sharing energy dissipation modules, turning off the first power semiconductor devices of the energy dissipation branches of the voltage-sharing energy dissipation modules; turning on second bypass switches connected in parallel with the voltage-sharing energy dissipation modules to allow the direct current capacitors to discharge through first discharging resistors of second bypass branches; and when it is detected that the voltage of the direct current capacitors is lower than a safe discharge value, turning on first bypass switches connected in parallel with the voltage-sharing energy dissipation modules.

Furthermore, the method further comprises: when it is detected that a fault happens to the voltage-sharing energy dissipation modules, turning off the first power semiconductor devices of the energy dissipation branches of the voltage-sharing energy dissipation modules; turning on third bypass switches connected in parallel with the first power semiconductor devices to allow the direct current capacitors to discharge through energy dissipation resistors; and when it is detected that the voltage of the direct current capacitors is lower than a safe discharge value, turning on first bypass switches connected in parallel with the voltage-sharing energy dissipation modules.

Furthermore, the method further comprises: when it is detected that a fault happens to the voltage-sharing energy dissipation modules and the voltage of the direct current capacitors is lower than a safety discharge value, turning on first bypass switches connected in parallel with the voltage-sharing energy dissipation modules.

Furthermore, the method further comprises: when it is detected that a fault happens to the voltage-sharing energy dissipation modules, turning on third power semiconductor devices connected in parallel with the voltage-sharing energy dissipation modules to bypass the voltage-sharing energy dissipation modules.

According to the technical solution provided by the embodiments of the present application, the unidirectional turn-on units are arranged in a centralized manner to be monitored and managed, and the direct current capacitors withstand the voltage of a line jointly, so that the risk that the power semiconductor devices in the voltage-sharing energy dissipation modules withstand an overvoltage is reduced; the capacitors have a conversion function and can control the voltage rise rate and the voltage drop rate to some extent, so that when the voltage of a direct current line rises, the first power semiconductor devices can be controlled to control on-off of the energy dissipation resistors to stabilize the direct current voltage; and the apparatus is high in cost performance and reliability and easy to implement.

### Brief Description of the Drawings

To clarify the technical solutions of the embodiments of the present application, the drawings used for the description of the embodiments will be briefly introduced below. Obviously, the drawings in the following description are merely for some embodiments of the present application. Those ordinarily skilled in the art can obtain other drawings according to the following ones without creative labor.
FIG. 1 is a topological diagram of a direct current energy dissipation apparatus provided by one embodiment of the present application;
FIG. 2 is a topological diagram of a direct current energy dissipation apparatus provided by another embodiment of the present application;
FIG. 3 is a topological diagram of a direct current energy dissipation apparatus provided by another embodiment of the present application;
FIG. 4 is a topological diagram of a direct current energy dissipation apparatus provided by another embodiment of the present application;
FIG. 5 is a topological diagram of a direct current energy dissipation apparatus provided by another embodiment of the present application;
FIG. 6 is a topological diagram of a direct current energy dissipation apparatus provided by another embodiment of the present application;
FIG. 7 is a component diagram of a voltage-sharing energy dissipation module provided by one embodiment of the present application;
FIG. 8 is a component diagram of a voltage-sharing energy dissipation module provided by another embodiment of the present application;
FIG. 9 is a component diagram of a voltage-sharing energy dissipation module provided by another embodiment of the present application;
FIG. 10 is a component diagram of a voltage-sharing energy dissipation module provided by another embodiment of the present application;
FIG. 11 is a flow diagram of a control method for a direct current energy dissipation apparatus provided by one embodiment of the present application;
FIG. 12 is a flow diagram of a control method for a direct current energy dissipation apparatus provided by another embodiment of the present application;
FIG. 13 is a flow diagram of a control method for a direct current energy dissipation apparatus provided by another embodiment of the present application;
FIG. 14 is a flow diagram of a control method for a direct current energy dissipation apparatus provided by another embodiment of the present application;
FIG. 15 is a flow diagram of a control method for a direct current energy dissipation apparatus provided by another embodiment of the present application;
FIG. 16 is a flow diagram of a control method for a direct current energy dissipation apparatus provided by another embodiment of the present application;
FIG. 17 is a flow diagram of a control method for a direct current energy dissipation apparatus provided by another embodiment of the present application;
FIG. 18 is a flow diagram of a control method for a direct current energy dissipation apparatus provided by another embodiment of the present application;

### Detailed Description of Embodiments

To clarify the purposes, technical solutions and advantages of the embodiments of the present application, specific implementations of the technical solutions of the present application are clearly explained in further detail below in conjunction with the accompanying drawings and embodiments. Obviously, the specific implementations and embodiments in the following description are merely for the purpose of description, and are not intended to limit the present application. The following embodiments are only illustrative ones, and are not all possible ones of the present application. All other embodiments obtained by those skilled in the art based on different variations of the present application should also fall within the protection scope of the present application.

It should be understood that terms such as "first", "second" and "third" are used in this specification to describe different elements or assemblies, but the elements or assemblies referred to should not be limited by these terms. These terms are merely used to distinguish one element from another and assembly from another, so a first element or assembly discussed below may be referred to as a second element or assembly without departing from the contents of the present application.

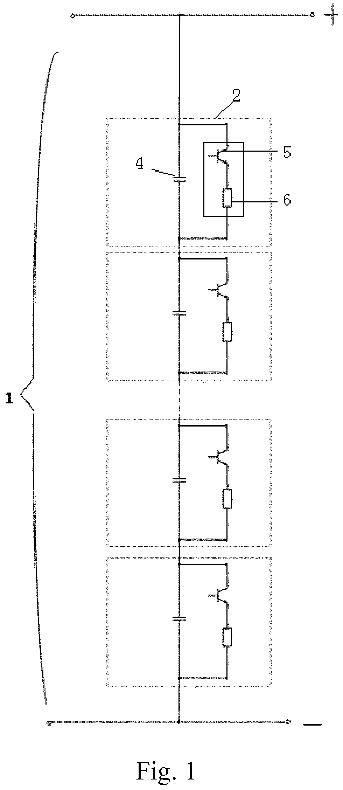

FIG. 1 is a topological diagram of a direct current energy dissipation apparatus provided by one embodiment of the present application. As shown, a direct current energy dissipation apparatus 1 comprises at least one energy dissipation unit and is connected in parallel to a medium-voltage or high-voltage direct current line. One terminal of the direct current energy dissipation apparatus is connected to a high-potential electrode of the direct current line, and the other terminal of the direct current energy dissipation apparatus is connected to a low-potential electrode of the direct current line.

The energy dissipation unit comprises at least two voltage-sharing energy dissipation modules 2 connected in series in the same direction. The voltage-sharing energy dissipation modules 2 comprise direct current capacitor branches and energy dissipation branches that are connected in parallel. The energy dissipation branches comprise first power semiconductor devices 5 and energy dissipation resistor 6 that are connected in series. The direct current capacitor branches comprise direct current capacitors 4. In this embodiment, the first power semiconductor devices 5 are fully-controlled power semiconductor devices.

Optionally, the first power semiconductor devices 5 may be connected in reverse-parallel with at least one diode. The energy dissipation resistors 6 may be connected in parallel with at least one diode. The first power semiconductor devices 5 of the voltage-sharing energy dissipation modules 2 are typically IGBTs provided with reverse-parallel diodes, two terminals of each of the energy dissipation resistors 6 are connected in parallel with diodes, the branches where the power semiconductor devices of the voltage-sharing energy dissipation modules 2 are located are directly connected in series, and the series branches only comprise the power semiconductor devices, comprise all power semiconductor devices and can be press-assembled during structural design, so that the size of the apparatus is greatly reduced, the operating consistency of the devices is guaranteed, and the equivalent inductance between the devices is decreased.

According to the technical solution provided by this embodiment of the present application, the apparatus is disassembled into multiple sub-modules by means of the voltage-sharing energy dissipation modules, each module comprises a direct current capacitor and a current-limiting resistor, and the direct current capacitors and the current-limiting resistors withstand the voltage of the line jointly, so that the risk that the power semiconductor devices in the voltage-sharing energy dissipation modules withstand an overvoltage is reduced; and the capacitors have a conversion function and can control the rise rate and drop rate of the voltage to some extent, so that when the voltage of the direct current line rises, the first power semiconductor devices can be controlled to control on-off of the energy dissipation resistors to stabilize the direct current voltage; and the apparatus is high in cost performance and reliability and easy to implement.

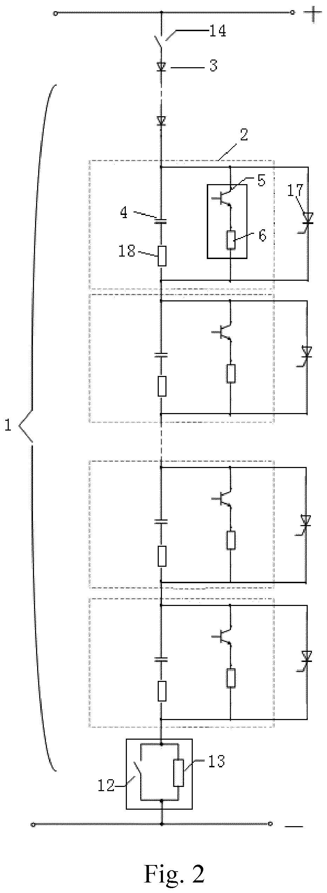

FIG. 2 is a topological diagram of a direct current energy dissipation apparatus provided by another embodiment of the present application. As shown, a direct current energy-dissipation apparatus 1 comprises at least one energy dissipation unit.

The energy dissipation unit comprises at least two voltage-sharing energy dissipation modules 2 connected in series in the same direction. The voltage-sharing energy dissipation modules 2 comprise direct current capacitor branches and energy dissipation branches that are connected in parallel. The energy dissipation branches comprise first power semiconductor devices 5 and energy dissipation resistors 6 that are connected in series. The direct current capacitor branches comprise direct current capacitors 4 and current-limiting resistors 18 connected in series with the direct current capacitors 4. The current-limiting resistors 18 may be replaced with, but are not limited to, current-limiting inductors or fuses. The first power semiconductor devices 5 are fully-controlled power semiconductor devices. Optionally, the first power semiconductor devices 5 may be connected in reverse-parallel with at least one diode. The energy dissipation resistors 6 may be connected in parallel with at least one diode.

According to the technical solution provided by this embodiment of the present application, unidirectional turn-on units are arranged in a centralized manner to form a diode string to facilitate monitoring and management, so that a capacitor bank is prevented from discharging to a fault point when a direct current line is short-circuited, and a protection and isolation effect is realized.

Referring to FIG. 2 which illustrates another embodiment of the present application, a direct current energy dissipation apparatus 1 comprises at least one energy dissipation unit, at least one unidirectional turn-on unit, at least one charging unit, and at least one isolating switch 14.

The energy dissipation unit comprises at least two voltage-sharing energy dissipation modules 2 connected in series in the same direction. The unidirectional turn-on unit comprises at least two second power semiconductor devices 3 connected in series in the same direction and is connected in series with the energy dissipation unit. The voltage-sharing energy dissipation modules 3 comprise direct current capacitor branches and energy dissipation branches that are connected in parallel. The energy dissipation branches comprise first power semiconductor devices 5 and energy dissipation resistors 6 that are connected in series. The direct current capacitor branches comprise direct current capacitors 4. Current-limiting resistors 18 may be replaced with, but are not limited to, current-limiting inductors or fuses. The second power semiconductor devices 3 and the first power semiconductor devices 5 are arranged in the same direction as a current allowed to flow across second power semiconductor devices 3 and the first power semiconductor devices 5. The charging unit is connected in series with the energy dissipation unit and the unidirectional turn-on unit and comprises a charging resistor 13 and a charging switch 12 that are connected in parallel. The isolating switch 14 is connected in series with the energy dissipation unit and the unidirectional turn-on unit. In this embodiment, the second power semiconductor devices 3 are diodes, semi-controlled power semiconductor devices, or fully-controlled power semiconductor devices. The first power semiconductor devices 5 are fully-controlled power semiconductor devices. Optionally, the first power semiconductor devices 5 may be connected in reverse-parallel with at least one diode. The energy dissipation resistors 6 may be connected in parallel with at least one diode.

Referring to FIG. 2 which illustrates another embodiment of the present application, a direct current energy dissipation apparatus 1 comprises at least one energy dissipation unit, at least one unidirectional turn-on unit, at least one charging unit, at least one isolating switch 14, and at least one third power semiconductor device 17.

The energy dissipation unit comprises at least two voltage-sharing energy dissipation modules 2 connected in series in the same direction. The unidirectional turn-on unit comprises at least two second power semiconductor devices 3 connected in series in the same direction and is connected in series with the energy dissipation unit. The voltage-sharing energy dissipation modules 2 comprise direct current capacitor branches and energy dissipation branches that are connected in parallel. The energy dissipation branches comprise first power semiconductor devices 5 and energy dissipation resistors 6 that are connected in series. The direct current capacitor branches comprise direct current capacitors 4 and current-limiting resistors 18 connected in series with the direct current capacitors 4. The current-limiting resistors 18 may be replaced with, but are not limited to, current-limiting inductors or fuses. The second power semiconductor devices 3 and the first power semiconductor devices 5 are arranged in the same direction as a current allowed to flow across the second power semiconductor devices 3 and the first power semiconductor devices 5. The charging unit is connected in series with the energy dissipation unit and the unidirectional turn-on unit and comprises a charging resistor 13 and a charging switch 12 that are connected in parallel. The isolating switch 14 is connected in series with the energy dissipation unit and the unidirectional turn-on unit. The third power semiconductor device 17 is connected in parallel with the voltage-sharing energy dissipation modules 2 and bypasses the voltage-sharing energy dissipation modules 2 when actively turned on or passively broken down. In this embodiment, the second power semiconductor devices 3 are diodes, semi-controlled power semiconductor devices, or fully-controlled semiconductor devices. The first power semiconductor devices 5 are fully-controlled power semiconductor devices. Optionally, the first power semiconductor devices 5 may be connected in reverse-parallel with at least one diode. The energy dissipation resistors 6 may be connected in parallel with at least one diode.

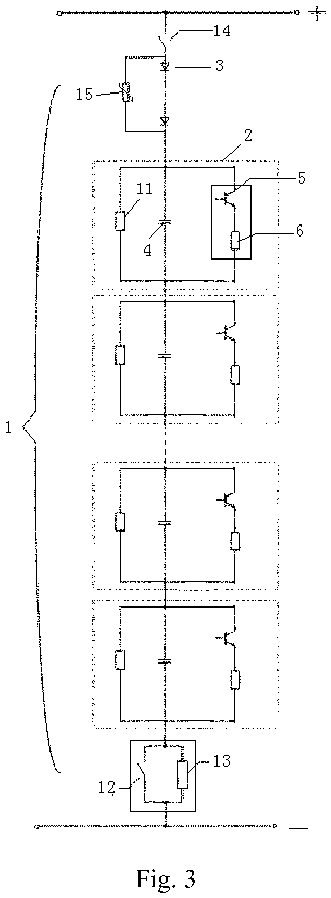

FIG. 3 is a topological diagram of a direct current energy dissipation apparatus provided by another embodiment of the present application. As shown, a direct current energy dissipation apparatus 1 comprises at least one energy dissipation unit, at least one unidirectional turn-on unit, at least one charging unit, at least one isolating switch 14, and at least one third power semiconductor device 17.

The energy dissipation unit comprises at least two voltage-sharing energy dissipation modules 2 connected in series in the same direction. The unidirectional turn-on unit comprises at least two second power semiconductor devices 3 connected in series in the same direction and is connected in series with the energy dissipation unit. The voltage-sharing energy dissipation modules 2 comprise direct current capacitor branches, energy dissipation branches, and voltage-sharing resistors 11 that are connected in parallel. The energy dissipation branches comprise first power semiconductor devices 5 and energy dissipation resistors 6 that are connected in series, and the voltage-sharing resistors 11 are connected in parallel with the direct current capacitor branches. The energy dissipation branches comprise first power semiconductor devices 5 and energy dissipation resistors 6 that are connected in series. The direct current capacitor branches comprise direct current capacitors 4. The second power semiconductor devices 3 and the first power semiconductor devices 5 are arranged in the same direction as a current allowed to flow across the second power semiconductor devices 3 and the first power semiconductor devices 5. The charging unit is connected in series with the energy dissipation unit and the unidirectional turn-on unit and comprises a charging resistor 13 and a charging switch 12 that are connected in parallel. The isolating switch 14 is connected in series with the energy dissipation unit and the unidirectional turn-on unit. The third power semiconductor device 17 is connected in parallel with the voltage-sharing energy dissipation modules 2 and bypasses the voltage-sharing energy dissipation modules 2 when actively turned on or passively broken down. In this embodiment, the second power semiconductor devices 3 are diodes, semi-controlled power semiconductor devices, or fully-controlled semiconductor devices. The first power semiconductor devices 5 are fully-controlled power semiconductor devices. Optionally, the first power semiconductor devices 5 may be connected reverse-parallel to at least one diode. The energy dissipation resistors 6 may be connected in parallel to at least one diode.

Referring to FIG. 3 which illustrates another embodiment of the present application, a direct current energy dissipation apparatus 1 comprises at least one energy dissipation unit, at least one unidirectional turn-on unit, at least one charging unit, at least one isolating switch 14, at least one third power semiconductor device 17, and at least one nonlinear resistor 15, wherein the nonlinear resistor 15 is connected in parallel with the unidirectional turn-on unit.

The energy dissipation unit comprises at least two voltage-sharing energy dissipation modules 2 connected in series in the same direction. The unidirectional turn-on unit comprises at least two second power semiconductor devices 11 connected in series in the same direction, is connected in parallel with one nonlinear resistor 15, and is then connected in series with the energy dissipation unit. The voltage-sharing energy dissipation modules 2 comprise direct current capacitor branches, energy dissipation branches, and voltage-sharing resistors 11 that are connected in parallel. The energy dissipation branches comprise first power semiconductor devices 5 and energy dissipation resistors 6 that are connected in series, and the voltage-sharing resistors 11 are connected in parallel with the direct current capacitor branches. The direct current capacitor branches comprise direct current capacitors 4. The second power semiconductor devices 3 and the first power semiconductor devices 5 are arranged in the same direction as a current allowed to flow cross the second power semiconductor devices 3 and the first power semiconductor devices 5. The charging unit is connected in series with the energy dissipation unit and the unidirectional turn-on unit and comprises a charging resistor 13 and a charging switch 12 that are connected in parallel. The isolating switch 14 is connected in series with the energy dissipation unit and the unidirectional turn-on unit. The third power semiconductor device 17 is connected in parallel with the voltage-sharing energy dissipation modules 2 and bypasses the voltage-sharing energy dissipation modules 2 when actively turned on or passively broken down. In this embodiment, the second power semiconductor devices 3 are diodes, semi-controlled power semiconductor devices, or fully-controlled power semiconductor devices. The first power semiconductor devices 5 are fully-controlled power semiconductor devices. Optionally, the first power semiconductors 5 may be connected in reverse-parallel with at least one diode. The energy dissipation resistors 6 may be connected in parallel with at least one diode.

According to the technical solution provided by this embodiment, two terminals of the unidirectional turn-on unit are connected in parallel with nonlinear resistors, so that a diode segment will not withstand an overvoltage and is protected in a centralized manner, and compared with traditional solutions, the total number of diodes is reduced.

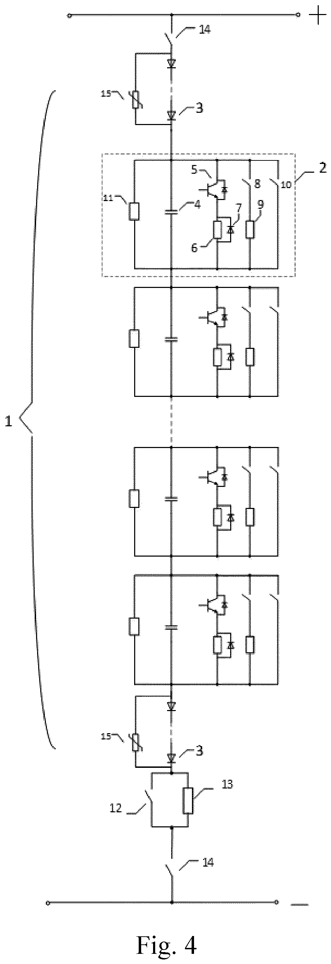

FIG. 4 is a topological diagram of a direct current energy dissipation apparatus provided by another embodiment of the present application. As shown, a direct current energy dissipation apparatus 1 comprises at least one energy dissipation unit, at least one unidirectional turn-on unit, at least one charging unit, at least one isolating switch 14, and at least one nonlinear resistor 15.

The energy dissipation unit comprises at least two voltage-sharing energy dissipation modules 2 connected in series in the same direction. The unidirectional turn-on unit comprises at least two second power semiconductor devices 11 connected in series in the same direction, is connected in parallel with one nonlinear resistor 15, and then is connected in series with the energy dissipation unit. The voltage-sharing energy dissipation modules 2 comprise direct current capacitor branches, energy dissipation branches, voltage-sharing resistors 11, and first bypass switches 10 that connected in parallel. The direct current capacitor branches comprise direct current capacitors 4. The energy dissipation branches comprise first power semiconductor devices 5 and energy dissipation resistors 6 that are connected in series, and the voltage-sharing resistors 11 are connected in parallel with the direct current capacitor branches. The first bypass switches 10 are connected in parallel with the direct current capacitor branches. The second power semiconductor devices 3 and the first power semiconductor devices 5 are arranged in the same direction as a current allowed to flow across the second power semiconductor devices 3 and the first power semiconductor devices 5. The charging unit is connected in series with the energy dissipation unit and the unidirectional turn-on unit and comprises a charging resistor 13 and a charging switch 12 that are connected in parallel. The isolating unit 14 is connected in series with the energy dissipation unit and the unidirectional turn-on unit. The third power semiconductor device 17 is connected in parallel with the voltage-sharing energy dissipation modules 2 and bypasses the voltage-sharing energy dissipation modules 2 when actively turned on or passively broken down.

That is to say, the direct current energy dissipation apparatus 1 comprises at least two voltage-sharing energy dissipation modules 2 and at least two second power semiconductor devices 3, wherein the at least two voltage-sharing energy dissipation modules are connected in series in the same direction to form at least one energy dissipation unit, the at least two second power semiconductor devices 3 are connected in series in the same direction to form at least one unidirectional turn-on unit, and the unidirectional turn-on unit is connected in series with the energy dissipation unit. The voltage-sharing energy dissipation modules 2 comprise direct current capacitor branches, energy dissipation branches, and first bypass switches 10, wherein the direct current capacitors, the energy dissipation branches, and the first bypass switches 10 are connected in parallel, and the energy dissipation branches are composed of first power semiconductor devices 5 and energy dissipation resistors 6 that are connected in series. In this embodiment, the second power semiconductor devices 3 are diodes, semi-controlled power semiconductor devices, or fully-controlled power semiconductor devices. The first power semiconductor devices 5 are fully-controlled power semiconductor devices. The first power semiconductor devices 5 are connected in reverse-parallel with a diode. The energy dissipation resistors 6 are connected in parallel with a diode 7.

According to the technical solution provided by this embodiment of the present application, when a serious fault happens to the voltage-sharing energy dissipation modules, the first bypass switches directly bypass the voltage-sharing energy dissipation modules to realize online on-off of the energy dissipation apparatus in time, so that aggravation and continuation of the fault are prevented.

Referring to FIG. 4 which illustrates another embodiment of the present application, a direct current energy dissipation apparatus 1 comprises at least one energy dissipation unit, at least one unidirectional turn-on unit, at least one charging unit, at least one isolating switch 14, and at least one nonlinear resistor 15.

The energy dissipation unit comprises at least two voltage-sharing energy dissipation modules 2 connected in series in the same direction. The unidirectional turn-on unit comprises at least two second power semiconductor devices 11 connected in series in the same direction, is connected in parallel with one nonlinear resistor 15, and is then connected in series with the energy dissipation unit. The voltage-sharing energy dissipation modules 2 comprise direct current capacitor branches, energy dissipation branches, voltage-sharing resistors 11, first bypass switches 10, and second bypass branchesthat are connected in parallel. The energy dissipation branches comprise first power semiconductor devices 5 and energy dissipation resistors 6 that are connected in series, and the voltage-sharing resistors 11 are connected in parallel with the direct current capacitor branches. The direct current capacitor branches comprise direct current capacitors 4. The first bypass switches 10 are connected in parallel with the direct current capacitor branches. The second bypass branches are connected in parallel with the direct current capacitor branches and the first bypass switches 10 and comprise second bypass switches 8 and first discharging resistors 9 that are connected in series. The second power semiconductor devices 3 and the first power semiconductor devices 5 are arranged in the same direction as a current allowed to flow across the second power semiconductor devices 3 and the first power semiconductor devices 5. The charging unit is connected in series with the energy dissipation unit, and the unidirectional turn-on unit and comprises a charging resistor 13 and a charging switch 12 that are connected in parallel. The isolating switch 14 is connected in series with the energy dissipation unit and the unidirectional turn-on unit. The third power semiconductor device 17 is connected in parallel with the voltage-sharing energy dissipation modules 2 and bypasses the voltage-sharing energy dissipation modules 2 when actively turned on or passively broken down. In this embodiment, the second power semiconductor devices 3 are diodes, semi-controlled power semiconductor devices, or fully-controlled power semiconductor devices. The first power semiconductor devices 5 are fully-controlled power semiconductor devices. The first power semiconductor devices 5 are connected in reverse-parallel with a diode. The energy dissipation resistors 6 are connected in parallel with a diode 7.

According to the technical solution provided by this embodiment of the present application, when a fault happens to the modules, for example, when an open-circuit fault happen to IGBTs, a serious consequence will not be caused although the voltage-sharing energy dissipation modules do not dissipate energy. In this case, the second bypass branches are closed first to release energy stored in the voltage of the direct current capacitors, and the first bypass switches will be turned on when the direct current voltage is lower than a safe discharge voltage, so that the situation where the direct current capacitors are suddenly short-circuited due to direct turn-on of the first bypass switches, and consequentially, the life of the direct current capacitors is affected is avoided. In some serious faults such as a short-circuit fault of the IGBTs, the resistors of the voltage-sharing energy dissipation modules will be put into the circuit, the direct current voltage will be pulled down immediately, and the resistors will be damaged a long time later. In this case, the first bypass switches can be directly turned on to realize dual bypass, so that the bypass reliability is greatly improved.

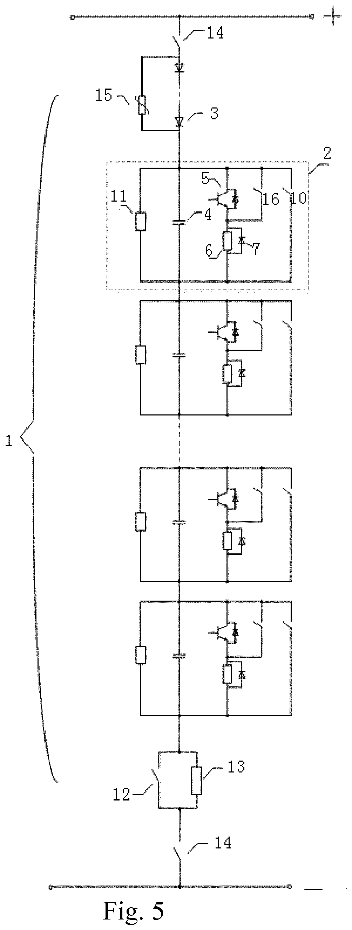

FIG. 5 is a topological diagram of a direct current energy dissipation apparatus provided by another embodiment of the present application. As shown, a direct current energy dissipation apparatus 1 comprises at least one energy dissipation unit, at least one unidirectional turn-on unit, at least one charging unit, at least one isolating switch 14, and at least one nonlinear resistor 15.

The energy dissipation unit comprises at least two voltage-sharing energy dissipation modules 2 connected in series in the same direction. The unidirectional turn-on unit comprises at least two second power semiconductor devices 11 connected in series in the same direction, is connected in parallel with a nonlinear resistor 15, and is then connected in series with the energy dissipation unit. The voltage-sharing energy dissipation modules 2 comprise direct current capacitor branches, energy dissipation braches, voltage-sharing resistors 11, first bypass switches 10, and third bypass switches 16 that are connected in parallel. The energy dissipation branches comprise first power semiconductor devices 5 and energy dissipation resistors 6 that are connected in series, and the voltage-sharing resistors 11 are connected in parallel with the direct current capacitors 4. The direct current capacitor branches comprise direct current capacitors 4. The first bypass switches 10 are connected in parallel with the direct current capacitor branches. The third bypass switches 16 are connected in parallel with the first power semiconductor devices 5. The second power semiconductor devices 3 and the first power semiconductor devices 5 are arranged in the same direction as a current allowed to flow across the second power semiconductor devices 3 and the first power semiconductor devices 5. The charging unit is connected in series with the energy dissipation unit and the unidirectional turn-off unit and comprises a charging resistor 13 and a charging switch 12 connected in parallel. The isolating switch 14 is connected in series with the energy dissipation unit and the unidirectional turn-on unit. In this embodiment, the second power semiconductor devices 3 are diodes, semi-controlled power semiconductor devices, or fully-controlled power semiconductor devices. The first power semiconductor devices 5 are fully-controlled power semiconductor devices. The first power semiconductor devices 5 are connected in reverse-parallel with a diode. The energy dissipation resistors 6 are connected in parallel with a diode 7.

According to the technical solution provided by this embodiment of the present application, when a fault happens to the modules, the third bypass switches are turned on first, and the first bypass switches are turned on when the direct current voltage is lower than a safe discharge value, so that the situation where the direct current capacitors are suddenly short-circuited due to direct turn-on of the first bypass switches, and consequentially, the life of the direct current capacitors is affected is avoided. In some serious faults, the first bypass switches can be directly turned on to realize dual bypass, so that the bypass reliability is greatly improved.

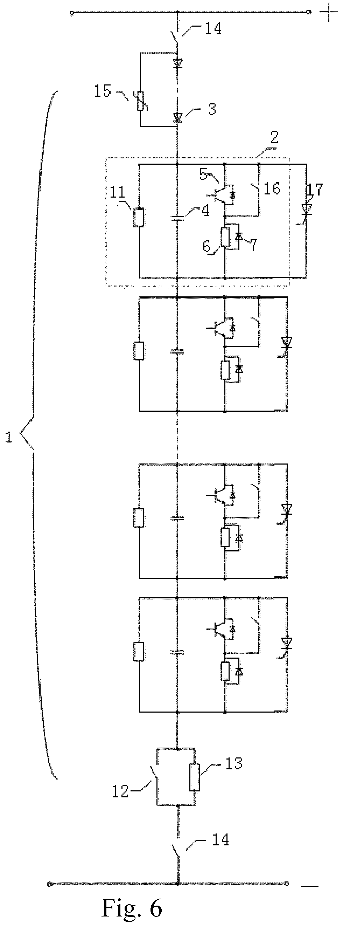

FIG. 6 is a topological diagram of a direct current energy dissipation apparatus provided by another embodiment of the present application. As shown, a direct current energy dissipation apparatus 1 comprises at least one energy dissipation unit, at least one unidirectional turn-on unit, at least one charging unit, at least one isolating switch 14, and at least one nonlinear resistor 15.

The energy dissipation unit comprises at least two voltage-sharing energy dissipation modules 2 connected in series in the same direction. The unidirectional turn-on unit comprises at least two second power semiconductor devices 11 connected in series in the same direction, is connected in parallel with one nonlinear resistor 15, and is then connected in series with the energy dissipation unit. The voltage-sharing energy dissipation modules 2 comprise direct current capacitor branches, energy dissipation branches, voltage-sharing resistors 11, third power semiconductor devices 17, and third bypass switches 16 that are connected in parallel. The energy dissipation branches comprise first power semiconductor devices 5 and energy dissipation resistors 6 that are connected in series, and the voltage-sharing resistors 11 are connected in parallel with the direct current capacitor branches. The third power semiconductor devices 17 are connected in parallel with the direct current capacitor branches. The direct current capacitor branches comprise direct current capacitors 4. The third bypass switches 16 are connected in parallel with the first power semiconductor devices 5. The second power semiconductor devices 3 and the first power semiconductor devices 5 are arranged in the same direction as a current allowed to flow across the second power semiconductor devices 3 and the first power semiconductor devices 5. The charging unit is connected in series with the energy dissipation unit and the unidirectional turn-on unit and comprises a charging resistor 13 and a charging switch 12 that are connected in parallel. The isolating switch 14 is connected in series with the energy consumption unit and the unidirectional turn-on unit. The third power semiconductor device 17 is connected in parallel with the voltage-sharing energy dissipation modules 2 and bypasses the voltage-sharing energy dissipation modules 2 when actively turned on or passively broken down. In this embodiment, the second power semiconductor devices 3 are diodes, semi-controlled power semiconductor devices, or fully-controlled power semiconductor devices. The first power semiconductor devices 5 are fully-controlled semiconductor devices. The first power semiconductor devices 5 are connected in reverse-parallel with a diode. The energy dissipation resistors 6 are connected in parallel with a diode 7.

According to the technical solution provided by this embodiment of the present application, when a fault happens to the modules, the third bypass switches are turned on first. In some serious faults, the third power semiconductor devices can be used for bypassing, particularly, thyristors are directly turned on or the third power semiconductor devices are broken down by an overvoltage to timely bypass the voltage-sharing energy dissipation modules, so that the bypass reliability is greatly improved.

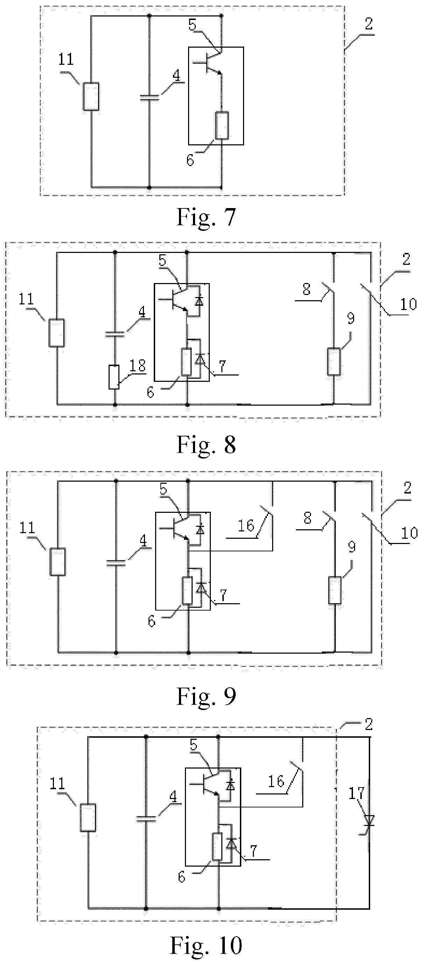

Referring to FIG. 7 which is a component diagram of the voltage-sharing energy dissipation module provided by one embodiment of the present application, the voltage-sharing energy dissipation module 2 comprises a direct current capacitor 4, an energy dissipation branch, and a voltage-sharing resistor 11 that are connected in parallel.

The energy dissipation branch comprises a first power semiconductor device 5 and an energy dissipation resistor 6 that are connected in series, and the voltage-sharing resistor 11 is connected in parallel with the direct current capacitor 4.

Referring to FIG. 8 which is a component diagram of the voltage-sharing energy dissipation module provided by another embodiment of the present application, the voltage-sharing energy dissipation module 2 comprises a direct current capacitor branch, an energy dissipation branch, a voltage-sharing resistor 11, and a first bypass switch 10 that are connected in parallel.

The energy dissipation branch comprises a first power semiconductor device 5 and an energy dissipation resistor 6 that are connected in series, and the voltage-sharing resistor 11 is connected in parallel with the direct current capacitor branch. The first bypass switch 10 is connected in parallel with the direct current capacitor branch. The first bypass switch 10 is a mechanical switch, or a solid-state switch composed of a power semiconductor device. The direct current capacitor branch comprises a direct current capacitor 4.

Referring to FIG. 8 which illustrates another embodiment of the present invention, the voltage-sharing energy-dissipation module 2 comprises a direct current capacitor branch, an energy dissipation branch, a voltage-sharing resistor 11, a first bypass switch 10, and a second bypass branch that are connected in parallel.

The energy dissipation branch comprises a first power semiconductor device 5 and an energy dissipation resistor 6 that are connected in series, and the voltage-sharing resistor 11 is connected in parallel with the direct current capacitor branch. The first bypass switch 10 is connected in parallel with the direct current capacitor branch. The direct current capacitor branch comprises a direct current capacitor 4 and a current-limiting resistor 18 connected in series with the direct current capacitor 4. The current-limiting resistor 18 may be replaced with, but is not limited to, a current-limiting inductor or a fuse. The second bypass branch is connected in parallel with the direct current capacitor branch and comprises a second bypass switch 8 and a first discharging resistor 9 that are connected in series. The second bypass switch 8 is a mechanical switch, or a solid-state switch composed of a power semiconductor device. As shown in FIG. 8, the first power semiconductor device 5 may be connected in reverse-parallel with at least one diode. The energy dissipation resistor 6 may be connected in parallel with at least one diode 7.

According to the technical solution provided by this embodiment of the present application, first power semiconductor devices of the voltage-sharing energy dissipation modules are typically IGBTs provided with reverse-parallel diodes, two terminals of each of the energy dissipation resistors are connected in parallel with diodes, the branches where the power semiconductor devices of the voltage-sharing energy dissipation modules are located are directly connected in series, and the series branches only comprise the power semiconductor devices, comprise all power semiconductor devices and can be press-assembled during structural design, so that the size of the apparatus is greatly reduced, the operating consistency of the devices is guaranteed, and the equivalent inductance between the devices is decreased.

Referring to FIG. 9 which is a component diagram of the voltage-sharing energy dissipation module provided by another embodiment of the present application, the voltage-sharing energy dissipation module 2 comprises a direct current capacitor branch, an energy dissipation branch, a voltage-sharing resistor 11, a first bypass switch 10, a second bypass branch, and a third bypass switch 16 that are connected in parallel.

The energy dissipation branch comprises a first power semiconductor device 5 and an energy dissipation resistor 6 that are connected in series, and the voltage-sharing resistor 11 is connected in parallel with the direct current capacitor branch. The direct current capacitor branch comprises a direct current capacitor 4. The first bypass switch 10 is connected in parallel with the direct current capacitor branch. The second bypass branch is connected in parallel with the direct current capacitor branch and comprises a second bypass switch 8 and a first discharging resistor 9 that are connected in series. The third bypass switch 16 is connected in parallel with the first power semiconductor device 5. The third bypass switch 16 is a mechanical switch, or a solid-state switch formed by a power semiconductor device. As shown in FIG. 9, the first power semiconductor device 5 may be connected in reverse-parallel with at least one diode. The energy dissipation resistor 6 may be connected in with at least one diode 7.

Referring to FIG. 10 which is a component diagram of the voltage-sharing energy dissipation module provided by another embodiment of the present application, the voltage-sharing energy dissipation module 2 comprises a direct current capacitor branch, an energy dissipation branch, a voltage-sharing resistor 11, and a third bypass switch 16 that are connected in parallel, and the voltage-sharing energy dissipation module 2 is connected with a third power semiconductor device.

The energy dissipation branch comprises a first power semiconductor device 5 and an energy dissipation resistor 6 that are connected in series, and the voltage-sharing resistor 11 is connected in parallel with the direct current capacitor branch. The direct current capacitor branch comprises a direct current capacitor 4. The third bypass switch 16 is connected in parallel with the first power semiconductor device 5. The third bypass switch 16 is a mechanical switch, or a solid-state switch formed by a power semiconductor device. The third power semiconductor device 17 is connected in parallel with the voltage-sharing energy dissipation module 2 and bypasses the voltage-sharing energy dissipation module 2 when actively turned on or passively broken down. As shown in FIG. 10, the first power semiconductor device 5 may be connected in reverse-parallel with at least one diode. The energy dissipation resistor 6 may be further connected in parallel with at least one diode 7.

The voltage-sharing energy dissipation module in the above embodiments may be configured in the direct current energy dissipation apparatus as actually needed.

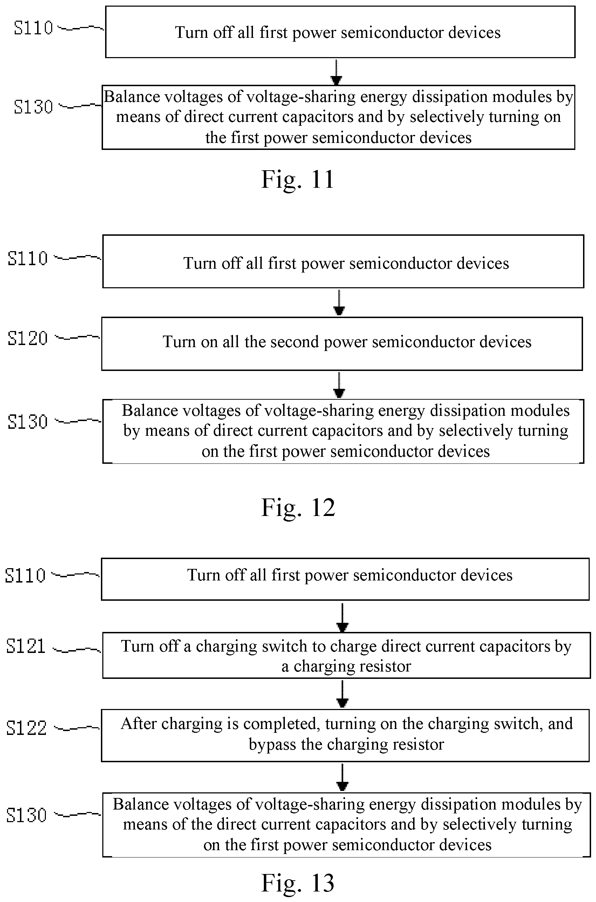

FIG. 11 is a flow diagram of a control method for a direct current energy dissipation apparatus provided by one embodiment of the present application. As shown, the method comprises the following steps.

S110: first power semiconductor devices of energy dissipation branches of all voltage-sharing energy dissipation modules are turned off.

When an apparatus is started, the first power semiconductor devices in the voltage-sharing energy dissipation modules are turned off.

S130: voltages of the voltage-sharing energy dissipation modules are balanced by means of direct current capacitors and by selectively turning on the first power semiconductor devices.

With the rise of the direct current voltage of a line, the direct current voltage across two terminals of the apparatus will rise accordingly, and the voltages of capacitors in the voltage-sharing energy dissipation modules are balanced by means of the voltage-sharing energy dissipation modules.

By adoption of this method, the direct current energy dissipation apparatus can share a charging circuit with an adjacent converter, so that direct current capacitors in the direct current energy dissipation apparatus and capacitors in a converter sub-module can be charged at the same time.

FIG. 12 is a flow diagram of a control method for a direct current energy dissipation apparatus provided by another embodiment of the present application. As shown, the method comprises the following steps.

S110: first power semiconductor devices of energy dissipation branches of all voltage-sharing energy dissipation modules are turned off, at this moment, a charging switch is turned off, and an isolating switch is also turned off.

S120: second power semiconductor devices of all unidirectional turn-on units of a direct current energy dissipation apparatus are turned on. Specifically, in other embodiments where no unidirectional turn-on unit is configured, it is unnecessary to turn on the second power semiconductor devices.

S130: voltages of the voltage-sharing energy dissipation modules are balanced by means of direct current capacitors and by selectively turning on the first power semiconductor devices. That is, the voltages of capacitors in the voltage-sharing energy dissipation modules are balanced by means of the energy dissipation branches.

FIG. 13 is a flow diagram of a control method for a direct current energy dissipation apparatus provided by another embodiment of the present application. As shown, an apparatus is charged by a charging unit when started, and the method comprises the following steps.

S110: first power semiconductor devices of energy dissipation branches of all voltage-sharing energy dissipation modules are turned off, at this moment, a charging switch is turned off, and an isolating switch is also turned off.

S121: after a direct current line is electrified, the isolating switch is turned on to charge direct current capacitors of the voltage-sharing energy dissipation modules by a charging resistor.

S122: after charging is completed, the charging switch is turned on, and the charging resistor is bypassed.

S130: voltages of the voltage-sharing energy dissipation modules are balanced by means of the direct current capacitors and by selectively turning the first power semiconductor devices. That is to say, the voltages of capacitors in the voltage-sharing energy dissipation modules are balanced by means of the energy dissipation branches.

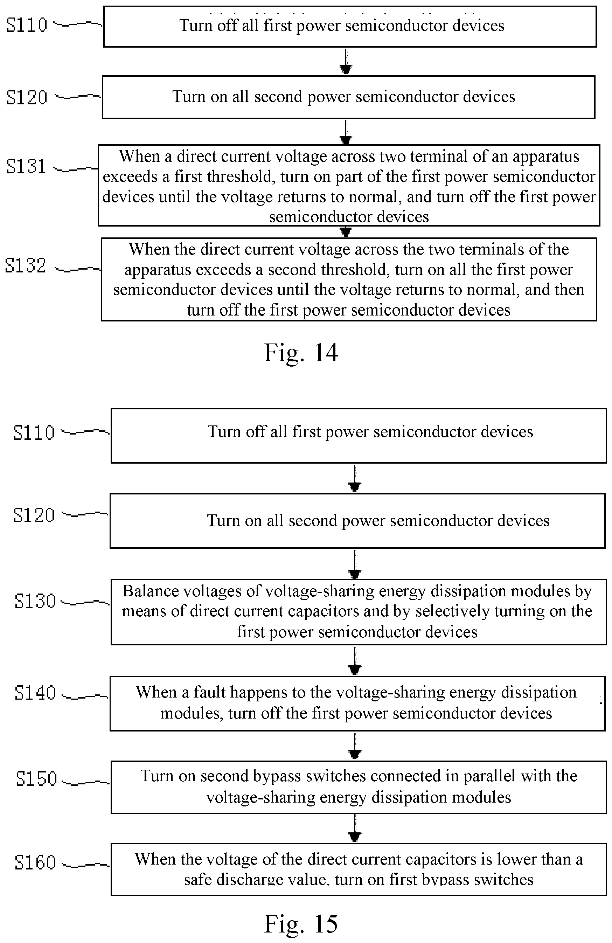

FIG. 14 is a flow diagram of a control method for a direct current energy dissipation apparatus provided by another embodiment of the present application. As shown, the method comprises the following steps.

S110: first power semiconductor devices of energy dissipation branches of all voltage-sharing energy dissipation modules are turned off.

When a direct current line connected to an apparatus operates normally, the first power semiconductor devices in the voltage-sharing energy dissipation modules are in an off state.

S120: second power semiconductor devices in all unidirectional turn-on units of the direct current energy dissipation apparatus are turned on.

At this moment, an isolating switch and a charging switch are turned on.

S131: in case of an overvoltage of the direct current line, when a direct current voltage across two terminals of the direct current energy dissipation apparatus rises and exceeds a first threshold, part of the first power semiconductor devices are turned on according to a rule until the direct current voltage returns to a normal value, and then, all the first power semiconductor devices are turned off.

In this embodiment, an energy dissipation mode will be enabled in case of an overvoltage of the direct current line. The normal value is 400kV, the first threshold for voltage control is set to 420kV, and a second threshold is set to 440kV.

In the energy dissipation mode, when it is detected that the voltage of the direct current line exceeds 420kV, part of the first power semiconductor devices in the voltage-sharing energy dissipation modules are turned on according to a rule. At this moment, resistors are put into operation to consume energy, and the variation of the direct current voltage depends on the accumulation rate and dissipation rate of energy.

In case where the energy dissipation rate is greater than the energy accumulation rate, the first power semiconductor devices in the voltage-sharing energy dissipation modules are turned off when it is detected that the direct current voltage returns to 400kV orbelow.

S132: when the direct current voltage rises and exceeds the second threshold, all the first power semiconductor devices are turned on until the direct current voltage returns to the normal value, and then all the first power semiconductor devices are turned off.

If the energy accumulation rate is greater than the energy dissipation rate, the direct current voltage will continue to rise; when the direct current voltage exceeds 440kV, the first power semiconductor devices in all the voltage-sharing energy dissipation modules are turned on at the same time to release energy accumulated on the direct current side with the maximum energy dissipation capacity.

When the voltage of direct current line returns to the normal value 400kV, the first power semiconductor devices in the voltage-sharing energy dissipation modules are turned off.

When a fault happens to the voltage-sharing energy dissipation modules, many bypass methods can be adopted.

FIG. 15 is a flow diagram of a control method for a direct current energy dissipation apparatus provided by another embodiment of the present application. As shown, the method comprises the following steps.

S110: first power semiconductor devices of energy dissipation branches of all voltage-sharing energy dissipation modules are turned off.

S120: second power semiconductor devices of all unidirectional turn-on units of a direct current energy dissipation apparatus are turned on.

S130: voltages of the voltage-sharing energy dissipation modules are balanced by means of direct current capacitors and by selectively turning on the first power semiconductor devices.

S140: when it is detected that a fault happens to the voltage-sharing energy dissipation modules, the first power semiconductor devices of the energy dissipation branches of the voltage-sharing energy dissipation modules are turned off.

S150: second bypass switches connected in parallel with the voltage-sharing energy dissipation modules are turned on to allow the direct current capacitors to discharge through first discharging resistors of second bypass branches.

S160: when it is detected that the voltage of the direct current capacitors is lower than a safe discharge value, first bypass switches connected in parallel with the voltage-sharing energy dissipation modules are turned on.

According to the technical solution provided by this embodiment of the present application, when a fault happens to the modules, the second bypass switches are turned on first to release energy stored in the voltage of the direct current capacitors; when the direct current voltage is lower than the safe discharge voltage, bypass switches of first bypass branches are turned on, so that the situation that the direct current capacitors are short-circuited suddenly due to direct turn-on of the first bypass switches, and consequentially, the life of the direct current capacitors is affected is avoided.

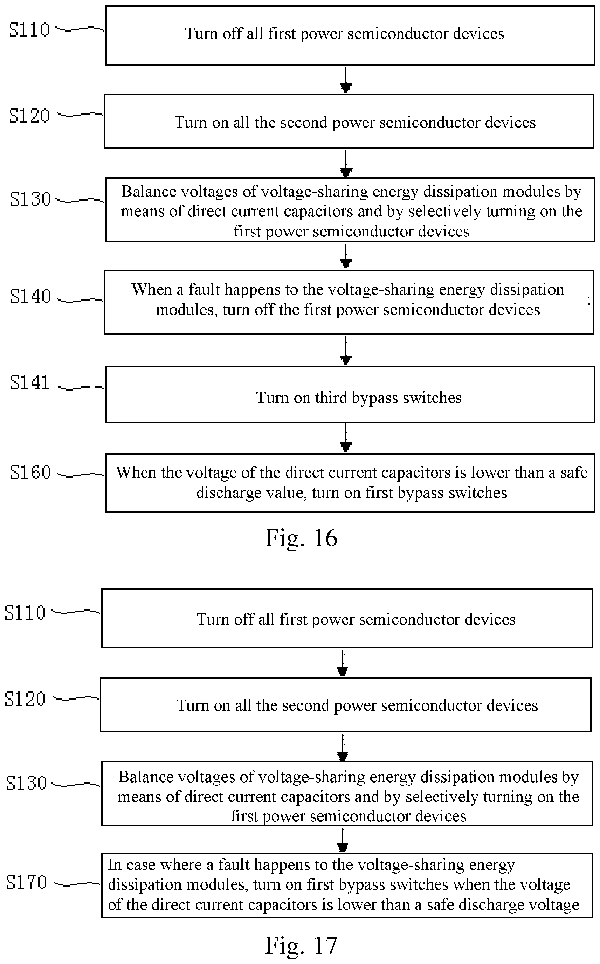

FIG. 16 is a flow diagram of a control method for a direct current energy dissipation apparatus provided by another embodiment of the present application. As shown, the method comprises the following steps.

S110: first power semiconductor devices of energy dissipation branches of all voltage-sharing energy dissipation modules are turned off.

S120: second power semiconductor devices of all unidirectional turn-on units of a direct-current energy dissipation device are turned on.

S130: voltages of the voltage-sharing energy dissipation modules are balanced by means of direct current capacitors and by selectively turning on the first power semiconductor devices.

S140: when a fault happens to the voltage-sharing energy dissipation modules, the first power semiconductor devices of the energy dissipation branches of the voltage-sharing energy dissipation modules are turned off.

S141: third bypass switches connected in parallel with the first power semiconductor devices are turned on to allow the direct current capacitor to discharge through energy dissipation resistors.

S160: when it is detected that the voltage of the direct current capacitors is lower than a safe discharge value, first bypass switches connected in parallel with the voltage-sharing energy dissipation modules are turned on.

Herein, it should be particularly noted that in case where the apparatus comprises the third bypass switches and the first bypass switches, the above steps will be performed. In case where the apparatus comprises the third bypass switches and does not comprise the first bypass switches, Step S160 will not be performed, the direct current capacitors discharge through energy dissipation resistors of the voltage-sharing energy dissipation modules, and the energy dissipation resistors are provided with a cooling system, so that currents can constantly flow across the energy dissipation resistors.

According to the technical solution provided by this embodiment of the present application, when a fault happens to the modules, the third bypass switches are turned on first to release energy stored in the voltage of the direct current capacitors, and the energy dissipation resistors are used as discharging resistors, so that the cost is reduced, and the utilization rate of the apparatus is increased. Moreover, the third bypass switches may be mechanical switches or solid-state switches and may be used as backups and redundancies of the first power semiconductor devices. When the direct current voltage is lower than the safe discharge voltage, bypass switches of the first bypass branches are turned on, so that the situation that the direct current capacitors are short-circuited suddenly due to direct turn-on of the first bypass switches, and consequentially, the life of the direct current capacitors is affected is avoided.

FIG. 17 is a flow diagram of a control method for a direct current energy dissipation apparatus provided by another embodiment of the present application. As shown, the method comprises the following steps.

S110: first power semiconductor devices of energy dissipation branches of all voltage-sharing energy dissipation modules are turned off.

S120: second power semiconductor devices of all unidirectional turn-on units of a direct current energy dissipation apparatus are turned on.

S130: voltage of the voltage-sharing energy dissipation modules are balanced by means of direct current capacitors and by selectively turning on the first power semiconductor devices.

S170: when it is detected that a fault happens to the voltage-sharing energy dissipation modules and the voltage of the direct current capacitors is lower than a safe discharge value, first bypass switches connected in parallel with the voltage-sharing energy dissipation modules are turned on.

According to the technical solution provided by this embodiment of the present application, in case of a serious fault, the first bypass switches can be directly turned on to bypass the voltage-sharing energy dissipation modules in time, so that the bypass reliability is further improved.

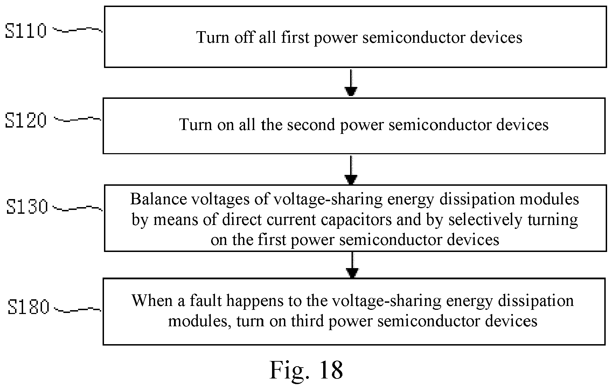

FIG. 18 is a flow diagram of a control method for a direct-current energy dissipation apparatus provided by another embodiment of the present application. As shown, the method comprises the following steps.

S110: first power semiconductor devices of energy dissipation branches of all voltage-sharing energy dissipation modules are turned off.

S120: second power semiconductor devices of all unidirectional turn-on units of a direct current energy dissipation apparatus are turned on.

S130: voltages of the voltage-sharing energy dissipation modules are balanced by means of direct current capacitors and by selectively turning on the first power semiconductor devices.

S180: when it is detected that a fault happens to the voltage-sharing energy dissipation modules, third power semiconductor devices connected in parallel with the voltage-sharing energy dissipation modules are turned on to bypass the voltage-sharing energy dissipation modules. The third power semiconductor devices comprise, but are not limited to, thyristors.

According to the technical solution of this embodiment of the present application, in some serious faults, the third power semiconductor devices can be used for bypassing, particularly, thyristors are directly turned on or the third power semiconductor devices are broken down by an overvoltage to timely bypass the voltage-sharing energy dissipation modules, so that the bypass reliability is greatly improved.

It should be noted that the embodiments described above with reference to the accompanying drawings are merely used to explain the present application, and are not intended to limit the scope of the present application. Those ordinarily skilled in the art should appreciate that all modifications or equivalent substitutions of the present application obtained without departing from the spirit and scope of the present application should also fall within the scope of the present application. In addition, unless otherwise defined in the specification, terms in the singular form may also be in the plural form, vice versa. In addition, unless otherwise specified, part or all of any one embodiment may be incorporated with part or all of another embodiment to be implemented.

## Claims

1. A direct current energy dissipation apparatus, comprising:
at least one energy dissipation unit, comprising at least two voltage-sharing energy dissipation modules connected in series in a same direction, wherein:
the voltage-sharing energy dissipation modules comprise direct current capacitor branches and energy dissipation branches connected in parallel, and the energy dissipation branches comprise first power semiconductor devices and energy dissipation resistors connected in series; and the direct current capacitor branches comprise direct current capacitors.

2. The direct current energy dissipation apparatus according to Claim 1, wherein the direct current capacitor branches further comprise current-limiting resistors, current-limiting inductors or fuses connected in series with the direct current capacitors.

3. The direct current energy dissipation apparatus according to Claim 1, further comprising:
at least one unidirectional turn-on unit, comprising at least two second power semiconductor devices connected in series in a same direction, and connected in series with the energy dissipation unit.

4. The direct current energy dissipation apparatus according to Claim 1, further comprising:
at least one charging unit, connected in series with the energy dissipation unit and comprising a charging resistor and a charging switch connected in parallel.

5. The direct current energy dissipation apparatus according to Claim 1, further comprising:
at least one isolating switch connected in series with the energy dissipation unit.

6. The direct current energy dissipation apparatus according to Claim 1, further comprising:
at least one third power semiconductor device, connected in parallel with the voltage-sharing energy dissipation modules and used to bypass the voltage-sharing energy dissipation modules when being actively turned on or passively broken down.

7. The direct current energy dissipation apparatus according to Claim 1, wherein the voltage-sharing energy dissipation modules further comprise:
voltage-sharing resistors, connected in parallel with the direct current capacitor branches.

8. The direct current energy dissipation apparatus according to Claim 1, wherein the voltage-sharing energy dissipation modules further comprise:
first bypass switches, connected in parallel with the direct current capacitor branches, wherein the first bypass switches are mechanical switches, or solid-state switches composed of power semiconductor devices.

9. The direct current energy dissipation apparatus according to Claim 1, wherein the voltage-sharing energy dissipation modules further comprise:
second bypass branches, connected in parallel with the direct current capacitor branches and comprising second bypass switches and first discharging resistors connected in series, wherein the second bypass switches are mechanical switches, or solid-state switches composed of power semiconductor devices.

10. The direct current energy dissipation apparatus according to Claim 1, wherein first bypass branches comprise:
third bypass switches, connected in parallel with the first power semiconductor devices, wherein the third bypass switches are mechanical switches, or solid-state switches composed of power semiconductor devices.

11. The direct current energy dissipation apparatus according to Claim 3, wherein the unidirectional turn-on unit is connected in parallel with a nonlinear resistor.

12. The direct current energy dissipation apparatus according to Claim 1, wherein the first power semiconductor devices are connected in reverse-parallel with at least one diode.

13. The direct current energy dissipation apparatus according to Claim 1, wherein the energy dissipation resistors are further connected in parallel with at least one diode.

14. The direct current energy dissipation apparatus according to Claim 3, wherein the second power semiconductor devices are diodes, semi-controlled power semiconductor devices, or fully-controlled power semiconductor devices.

15. The direct current energy dissipation apparatus according to Claim 1, wherein the first power semiconductor devices are fully-controlled power semiconductor devices.

16. A control method for a direct current energy dissipation apparatus, comprising:
turning off first power semiconductor devices of energy dissipation branches of each of voltage-sharing energy dissipation modules; and
balancing voltages of the voltage-sharing energy dissipation modules by means of direct current capacitors and by selectively turning on the first power semiconductor devices.

17. The method according to Claim 16, wherein after the step of turning off first power semiconductor devices of energy dissipation branches of each of voltage-sharing energy dissipation modules, the method further comprises:
turning on second power semiconductor devices of each of unidirectional turn-on units of the direct current energy dissipation apparatus.

18. The method according to Claim 16, wherein after the step of turning off first power semiconductor devices of energy dissipation branches of each of voltage-sharing energy dissipation modules, the method further comprises:
turning off a charging switch, and charging the direct current capacitors of the voltage-sharing energy dissipation modules by a charging resistor; and
after charging is completed, turning on the charging switch, and bypassing the charging resistor.

19. The method according to Claim 16, wherein the step of balancing voltages of the voltage-sharing energy dissipation modules by means of direct current capacitors and by selectively turning on the first power semiconductor devices comprises:
when a direct current voltage across two terminals of the direct current energy dissipation apparatus rises and exceeds a first threshold, turning on a part of the first power semiconductor devices according to a rule until the direct current voltage returns to a normal value, and then turning off each of the first power semiconductor devices; and
when the direct current voltage rises and exceeds a second threshold, turning on each of the first power semiconductor devices until the direct current voltage returns to the normal value, and then turning off each of the first power semiconductor devices.

20. The method according to Claim 16, further comprising:
when it is detected that a fault happens to the voltage-sharing energy dissipation modules, turning off the first power semiconductor devices of the energy dissipation branches of the voltage-sharing energy dissipation modules;
turning on second bypass switches connected in parallel with the voltage-sharing energy dissipation modules to allow the direct current capacitors to discharge through first discharging resistors of second bypass branches; and
when it is detected that a voltage of the direct current capacitors is lower than a safe discharge value, turning on first bypass switches connected in parallel with the voltage-sharing energy dissipation modules.

21. The method according to Claim 16, further comprising:
when it is detected that a fault happens to the voltage-sharing energy dissipation modules, turning off the first power semiconductor devices of the energy dissipation branches of the voltage-sharing energy dissipation modules;
turning on third bypass switches connected in parallel with the first power semiconductor devices to allow the direct current capacitors to discharge through energy dissipation resistors; and
when it is detected that a voltage of the direct current capacitors is lower than a safe discharge value, turning on first bypass switches connected in parallel with the voltage-sharing energy dissipation modules.

22. The method according to Claim 16, further comprising:
when it is detected that a fault happens to the voltage-sharing energy dissipation modules and a voltage of the direct current capacitors is lower than a safe discharge value, turning on first bypass switches connected in parallel with the voltage-sharing energy dissipation modules.

23. The method according to Claim 16, further comprising:
when it is detected that a fault happens to the voltage-sharing energy dissipation modules, turning on third power semiconductor devices connected in parallel with the voltage-sharing energy dissipation modules to bypass the voltage-sharing energy dissipation modules.
